# FASCICULE DE BREVET EUROPEEN

(11) **EP 0 806 041 B1**
(45) Date de publication et mention de la délivrance du brevet: **30.09.1998**
(21) Numéro de dépôt: 96901420.8
(22) Date de dépôt: 19.01.1996
(51) Int. Cl.: G11B 23/03, G11B 33/04

(54) **BOITIER OU ELEMENT DE BOITIER EN MATIERE PLASTIQUE, NOTAMMENT POUR DISQUE COMPACT**
BEHÄLTER ODER BEHÄLTERELEMENT AUS KUNSTSTOFF, INSBESONDERE FÜR COMPACT DISCS
PLASTIC BOX OR BOX ELEMENT, IN PARTICULAR FOR A COMPACT DISC

(30) Priorité: 26.01.1995 FR 9501141
(43) Date de publication de la demande: 12.11.1997
(73) Titulaire: La Française Des Plastiques, 35680 Louvigné-de-Bais (FR)
(72) Inventeur: CHA, Philippe, F-35750 Iffendic (FR); SAVATTE, Eric, F-35500 Vitré (FR); TABURET, Dominique, F-35680 Bais (FR)
(74) Mandataire: Le Faou, Daniel
(86) Numéro de dépôt international: FR9600091
(87) Numéro de publication internationale: WO9623304

(56) Documents cités:
- EP-A- 0 272 042
- EP-A- 0 576 256
- DE-U- 9 404 298
- FR-A- 2 004 274
- GB-A- 2 154 550
- GB-A- 2 185 710
- US-A- 3 949 872

## Description

La présente invention concerne un boîtier, ou un élément de boîtier, composé d'au moins deux éléments réalisés en matière plastique moulée et articulés l'un à l'autre par au moins une charnière.

Dans le cas d'un boîtier, ces deux éléments peuvent être le fond et le couvercle du boîtier.

L'invention a été conçue pour un boîtier plat destiné à recevoir un support d'enregistrement optique ou magnétique à haute densité d'information, et plus précisément un disque compact (disque audio-numérique).

Elle est cependant applicable à d'autres types de boîtiers, pouvant contenir différents articles.

Les boîtiers traditionnels pour disques compacts comprennent essentiellement deux éléments, à savoir un fond et un couvercle, qui sont articulés l'un à l'autre par une charnière. Ces deux éléments sont en matière plastique transparente rigide, moulée par injection. Le matériau est généralement le polystyrène cristal.

L'un des éléments porte des tétons latéraux qui s'engagent dans des ouvertures prévues dans l'autre élément, formant ainsi une paire de tourillons co-axiaux constituant la charnière.

A l'intérieur de chaque élément de boîtier est insérée une étiquette en papier, visible par transparence de l'exténeur, et portant une information en rapport avec le contenu du disque.

Généralement, l'étiquette de l'élément de couvercle est glissée contre la face interne de la paroi du couvercle et y est maintenue en place par des pattes latérales ; l'étiquette est parfois remplacée ou complétée par un livret amovible.

Le disque est maintenu en place dans un plateau en matière plastique moulée clipsé dans l'élément de fond, l'étiquette étant retenue en sandwich entre ce plateau et la paroi de fond. Ce plateau intermédiaire comprend un organe central de retenue du disque, qui consiste en des doigts élastiques radialement déformables, qui s'engagent dans l'ouverture centrale du disque ; cet organe de retenue est couramment appelé "rosace" ou "tulipe".

Généralement, l'étiquette du fond présente deux rebords rabattus à angle droit qui viennent se placer contre les faces internes des chants de l'élément de fond. Il est prévu sur ces rebords rabattus une information visible par transparence à travers les chants du boîtier, lorsque celui-ci est stocké de telle manière que sa tranche soit visible.

Ce genre de boîtier est d'un prix de revient relativement élevé.

En effet, les trois éléments qui le constituent (fond, couvercle et plateau intermédiaire) sont fabriqués séparément par moulage par injection, et sont assemblés ultérieurement. De plus, à l'opération d'assemblage s'ajoute celle de la pose des étiquettes.

Un autre inconvénient des boîtiers connus est la fragilité des oreilles portant les tétons latéraux constitutifs de la charnière, cause de rebuts au montage et de casses à l'usage.

Dans le document GB-A-2 154 550 est décrit un boîtier porte-disque dont le fond, le couvercle, et le dos sont réalisés par moulage d'un élément unique, en polypropylène. Le fond et le couvercle sont articulés par rapport au dos par des lignes d'affaiblissement obtenues par rainurage de la matière.

On connaît par ailleurs, par le document GB-A-2 185 710, un boîtier en polypropylène chargé par du talc, moulé par injection. Le boîtier est muni d'une étiquette constituée par une feuille, également en polypropylène qui est intégrée au boîtier par surmoulage au cours du processus d'injection. Le fond et le couvercle de ce boîtier sont formés d'un seul tenant, et sont reliés par une zone de moindre résistance formant charnière ; la feuille de polypropylène recouvre cette zone charnière afin de la renforcer mécaniquement.

Dans ce dispositif connu, l'étiquette ne constitue pas la charnière - et ne se substitue pas à elle -, mais la renforce seulement.

Un inconvénient important de ces dispositifs connus est qu'il est nécessaire d'utiliser, comme matériau constitutif du boîtier, un matériau souple et non cassant puisqu'il doit faire office de charnière et donc résister à des flexions répétées.

C'est pourquoi, un premier objectif de l'invention est de supprimer ces divers inconvénients en proposant une structure de boîtier du type mentionné qui, tout en conservent un prix de revient concurrentiel, possède une charnière particulièremcni robuste et durable.

Un autre objectif de l'invention est de pouvoir recourir à des matériaux rigides et cassants, notamment au polystyrène cristal dont la qualité de transparence est remarquable.

Un autre objectif de l'invention est de proposer un boîtier, notamment un boîtier plat pour disque compact, dans lequel le maintien de ce disque ne nécessite pas l'utilisation d'un plateau intermédiaire, mais puisse se faire directement dans l'élément de fond.

A cet égard, il convient de noter qu'avec les boîtiers traditionnels la présence de l'étiquette dans l'élément de fond empêche de mouler la rosace directement dans la paroi du fond.

Un objectif additionnel de l'invention est de proposer un nouveau système de maintien du disque dans le boîtier, à l'intérieur de l'élément de fond, ce système permettant une mise en place et un retrait faciles du disque.

Un objectif additionnel de l'invention est d'améliorer la lecture des informations visibles sur le chant du boîtier.

Ces différents objectifs sont atteints, conformément à l'invention, grâce à un boîtier ou élément de boîtier selon la revendication 1.

Ainsi, la charnière étant constituée par cette zone uniquement, il suffit que le matériau de la feuille soit souple et puisse résister mécaniquement à des flexions alternées. La nature du matériau des éléments du boîtier est sans importance. Le seul impératif est celui de la compatibilité d'adhérence de surface au surmoulage entre les matériaux de la feuille et des éléments de boîtier.

On notera que, par le document US-A-3 949 872, il a déjà été proposé de relier les éléments de couvercle et de fond d'un étui porte-disque au moyen d'une bande flexible fixée par collage ou par soudage électrique haute-fréquence aux deux éléments, cette bande faisant office de charnière.

Cependant, ce mode de liaison est mal adapté aux contraintes de production en grande série, notamment sur le plan de la qualité et du prix de revient, que l'on rencontre dans certains domaines de l'industrie, en particulier pour le conditionnement des supports d'enregistrement audiovisuel et celui des médicaments.

Par ailleurs, selon un certain nombre de caractéristiques avantageuses, non limitatives de l'invention :
- l'un au moins desdits éléments possède une paroi principale plane dont l'une des faces est complètement ou partiellement recouverte par une partie de ladite feuille ;
- cette paroi principale plane présente des évidements d'allégement qui sont également recouverts par ladite feuille ;
- la feuille est une étiquette informative;
- lesdits éléments sont en matière plastique transparente;
- la feuille est en maténau transparent;
- la feuille formant étiquette comporte des informations sur chacune de ses deux faces;
- la feuille souple est réalisée dans un matériau ayant de bonnes résistances mécaniques tout en étant compatible au moulage avec la matière plastique constitutive desdits éléments, ce matériau étant notamment un complexe polypropylène/polystyrène ou polyéthylène/polystyrène.

Lorsqu'on a affaire à un boîtier:
- l'un des éléments est un fond et l'autre un couvercle, et ces deux éléments présentent des profils d'emboîtement complémentaires disposés en regard l'un de l'autre, dans la zone charnière, et aptes à assurer le guidage mutuel des deux éléments au cours de la fermeture du boîtier, puis leur verrouillage relatif après fermeture ;
- les éléments de fond et de couvercle possèdent tous deux une paroi principale plane dont l'une des faces est complètement ou partiellement recouverte par une partie de ladite feuille, et l'une au moins de ces parois principales présente, du côté de la charnière, un rebord qui est également recouvert par la feuille;
- ce rebord est muni d'un profil d'emboîtement;
- la partie de la feuille recouverte par ledit rebord porte, sur sa face adhérant à celui-ci, une inscription informative visible par transparence à travers l'épaisseur de ce rebord, celui-ci étant conformé en loupe.

La feuille peut être fixée soit aux faces externes, soit aux faces internes, des éléments de fond et de couvercle.

Selon d'autres caractéristiques possibles du boîtier ou de l'élément de boîtier:
- il est destiné à recevoir au moins un support d'enregistrement, tel qu'un disque compact;
- l'un au moins de ses éléments articulés est muni d'organes de centrage et de retenue du disque;
- ces organes consistent en une rosace venant de moulage avec l'élément, et apte à s'engager dans l'ouverture centrale du disque.

Dans un mode de réalisation possible du boîtier, celui-ci a une forme plate, à contour rectangulaire de faible épaisseur, dont l'élément de fond porte les organes de centrage et de retenue du disque.

Selon d'autres caractéristiques additionnelles possibles :
- ladite feuille contient des moyens de détection anti-vol;
- l'un des éléments articulés de l'élément de boîtier consiste en un plateau apte à supporter et retenir une paire de disques compact, chacun contre l'une de ses deux faces, tandis que l'autre consiste en une barrette-support, l'ensemble étant dimensionné et conformé de telle façon qu'il peut être inséré à l'intérieur d'un boîtier de forme et de dimensions similaires à un boîtier destiné à recevoir un seul disque compact;
- lesdits éléments sont rattachés l'un à l'autre par au moins une patte frangible, de sorte qu'ils forment initialement un ensemble rigide favorisant la pose automatisée des disques sur le plateau, et la pose de l'élément de boîtier dans le boîtier.
- cette barrette-support comprend des ailes latérales qui sont munies de bossages permettant son clippage dans le boîtier ;

D'autres caractéristiques et avantages de l'invention apparaîtront de la description et des dessins annexés qui en représentent, à simple titre d'exemples non limitatifs, des modes de réalisation préférés.

Sur ces dessins :
- la figure 1 est une vue en perspective d'un boîtier plat pour disque compact conforme à l'invention, représenté à l'état ouvert;
- la figure 2 est une vue en coupe transversale du boîtier de la figure 1, le plan de coupe étant perpendiculaire à l'axe de la charnière;
- les figures 3 et 3A sont des vues de détail, en coupe, de la zone de la charnière, respectivement en cours de fermeture et en fin de fermeture;
- la figure 4 est une vue de détail de la zone de la charnière d'une première variante du boîtier, ce dernier étant ouvert;
- la figure 4A est une vue similaire de la figure 4 représentant le boîtier fermé ;
- les figures 5 et 5A sont des vues similaires aux figures 4 et 4A respectivement, d'une autre variante de réalisation ;
- la figure 6 représente un détail d'une troisième variante dont le chant produit un effet de loupe ;
- la figure 7 représente une quatrième variante, à double charnière;
- la figure 8 est une vue en perspective d'un élément de boîtier à plateau pivotant conforme à l'invention, destiné à recevoir une paire de disques compact;
- la figure 9 est une vue en bout de la barrette constitutive de l'élément de boîtier de la figure 8 ;
- les figures 9A et 9B sont des vues partielles en coupe montrant la zone charnière des deux parties de cet élément de boîtier, respectivement avant et après pivotement du plateau, le plan de coupe étant le plan de symétrie longitudinal médian de l'élément;
- les figures 10 et 11 représentent - à l'état ouvert -, à échelle réduite, deux modes de réalisation possibles de boîtiers destinés à recevoir plusieurs disques compacts, et pourvus respectivement d'un et de deux plateaux porte-disques pivotants;
- la figure 12 est une vue en perspective d'un boîtier léger, dont les éléments de fond et de couvercle sont largement évidés.

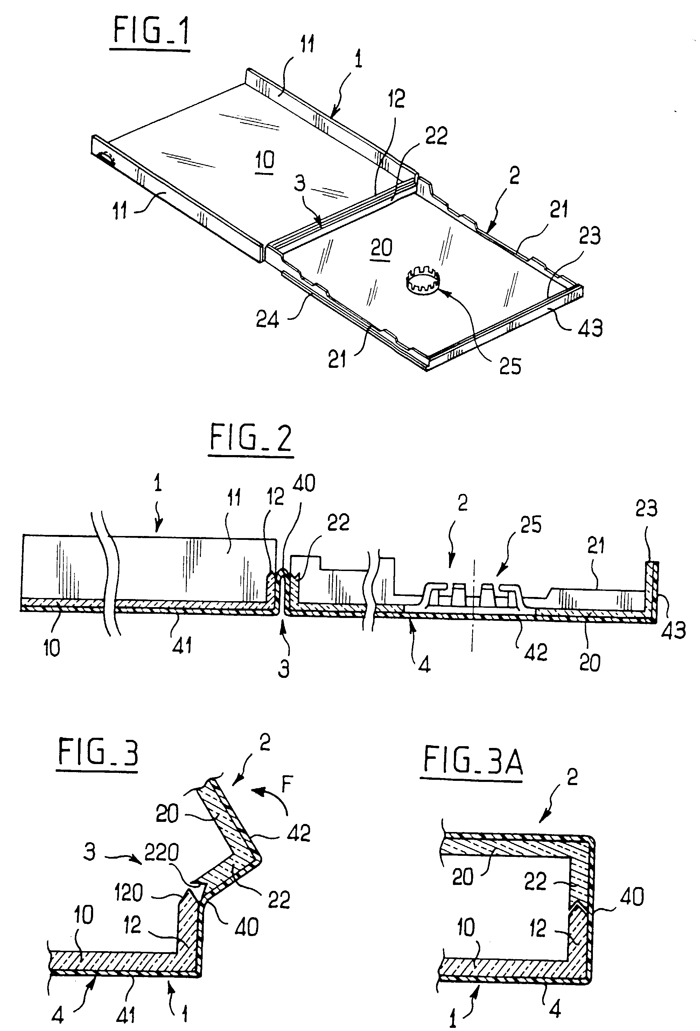

Le boîtier représenté aux figures 1 et 2, destiné à recevoir et à contenir un disque compact, comprend deux éléments en polystyrène cristal moulés par injection, à savoir un élément de fond 2 et un élément de couvercle 1.

On a désigné par la référence 10 la paroi principale, de forme rectangulaire, de l'élément 1 et par la référence 20 la paroi principale, de forme similaire, de l'élément 2.

Ces deux éléments sont articulés l'un à l'autre, à la manière des pages d'un livre, par une zone charnière 3.

De manière bien connue, l'élément de couvercle 10 possède des flancs latéraux 11 rabattus à angle droit par rapport à la paroi 10; l'élément 20 possède des flancs latéraux similaires 21, qui sont échancrés en zone centrale pour permettre la saisie du disque retenu dans le boîtier.

Du côté opposé à la charnière 3, l'élément 2 présente une cloison 23 qui s'étend également à angle droit par rapport à la paroi 20.

Les flancs 21 se trouvent en retrait par rapport au bord de la paroi 20, ce qui ménage ainsi un rebord latéral 24.

Lorsque le boîtier est fermé, les flancs 21 se trouvent en contact contre les flancs 11, à l'intérieur de ces derniers, tandis que la cloison 23 constitue le chant du boîtier, du côté opposé à la charnière 3.

Comme cela sera expliqué plus loin, il est fixé sur les faces extérieures des éléments 1 et 2 une feuille formant étiquetage, dont une partie 43, rabattue contre la cloison 23, est visible à la figure 1.

Des moyens de blocage élastiques non représentés, tels que des petits bossages prévus dans l'un des éléments et s'engageant dans des évidements prévus dans l'autre, assurent le blocage du boîtier dans son état fermé.

Dans le fond 2, à peu près au centre de la paroi 20, est prévue une rosace 25 qui vient de moulage avec l'élément de fond ; celle-ci possède des doigts élastiques aptes à s'engager dans l'ouverture centrale du disque pour l'immobiliser et le retenir à l'intérieur du boîtier, contre la paroi 20.

Ce système de maintien du disque, bien connu, ne sera pas décrit en détail ici pour ne pas alourdir inutilement la description.

Dans la zone charnière 3, les parois 10 et 20 sont rabattues à angle droit, pour constituer des cloisons adjacentes 12 et respectivement 22. La hauteur de ces cloisons correspond à la moitié de l'épaisseur du boîtier, lorsque celui-ci est à l'état fermé, ce qui permet aux deux cloisons de venir dans le prolongement l'une de l'autre à l'état fermé (voir figure 3A).

Selon une caractéristique essentielle de l'invention, le boîtier comprend une feuille souple en matière synthétique 4. Elle est réalisée dans un matériau ayant de bonnes résistances mécaniques, notamment au déchirement et aux flexions alternées; de plus, ce maténau doit être compatible avec la matière plastique constitutive des éléments de fond 1 et 2, de manière à pouvoir y adhérer par surmoulage.

Comme matériaux convenables, on citera par exemple les complexes polypropylène / polystyrène ou polyéthylène / polystyrène; il s'agit d'un film sandwich obtenu par adhésion ou co-extrusion, ceci n'étant pas limitatif.

A titre indicatif, la feuille 4 a une épaisseur comprise entre 50 et 150 micromètres, par exemple de l'ordre de 80 micromètres.

La feuille 4 est une feuille rectangulaire dont la largeur est la même que celle des parois 10 et 20, et dont la longueur est très légèrement supérieure à la somme des longueurs des parois 10 et 20 et des hauteurs des rebords 12, 22 et 23.

Sur les figures, on a donné les références 41, 42 et 43 aux parties de la feuille qui adhérent respectivement aux faces 10 et 12 de l'élément 1 et 22, 20 et 23 de l'élément 2. La zone libre intermédiaire séparant ces deux éléments est référencée 40.

Dans le mode de réalisation des figures 1 à 3, la feuille 4 adhère aux faces extérieures du boîtier.

Les éléments 1 et 2 sont fabriqués dans un moule unique approprié par injection, la feuille 4 ayant préalablement été mise en place dans ce moule.

De préférence, pour une meilleure qualité de surmoulage, c'est la face de la feuille en polystyrène qui est tournée vers l'intérieur du moule, de manière à venir en contact avec le polystyrène cristal en fusion, lorsque celui-ci vient remplir le moule. Toutefois ceci n'est pas une obligation.

La retenue de la feuille à l'intérieur du moule, avant et pendant le moulage, peut se faire par tout moyen connu dans la technique du moulage par injection, notamment par mise en oeuvre d'un effet électrostatique.

Après démoulage, les parties de feuille 41 et 42 adhérent complètement avec chacun des éléments 1 et 2, respectivement, tandis que la zone intermédiaire libre 40, par suite de la souplesse et de la flexibilité de la feuille, assure le rôle de charnière.

Comme on le voit sur les figures 3 et 3A, les bords libres des parties 12 et 22 ont des profils d'emboîtement complémentaires 120-220, l'un concave et l'autre convexe (par exemple en "V" ou en "U") qui assurent leur guidage en cours de la fermeture du boîtier, fermeture symbolisée par la flèche **F** à la figure 3. Ces profils assurent aussi le verrouillage en translation des parties 1 et 2, l'une par rapport à l'autre, après fermeture.

Selon une caractéristique intéressante de l'invention, la feuille 4 est impnmée, et joue dont le rôle d'étiquetage informatif, rôle qui était dévolu jusqu'ici aux étiquettes en papier qu'il fallait insérer à l'inténeur des éléments 1 et 2.

Avantageusement, la feuille 4 est imprimée préalablement à l'opération de moulage, si bien que c'est un produit fini qui sort du moule, prêt à recevoir son disque compact.

De préférence, les parties 41 et 42 recouvrent la totalité des faces externes des parties 10 et 20 respectivement. Il va de soi cependant que ce recouvrement pourrait être seulement partiel.

Les informations, en forme d'inscriptions, photos, dessins et/ou autres signes, se trouvent impnmées sur la face externe de celle-ci. Des inscriptions peuvent être prévues également sur le chant du boîtier, en vis-à-vis des parties 12, 22 et 23.

Toutefois, du fait que les éléments 1 et 2 sont en matériau transparent, il est également possible de prévoir des inscnptions informatives sur la face interne de la feuille 4, ces inscriptions étant visibles lorsque le boîtier est ouvert.

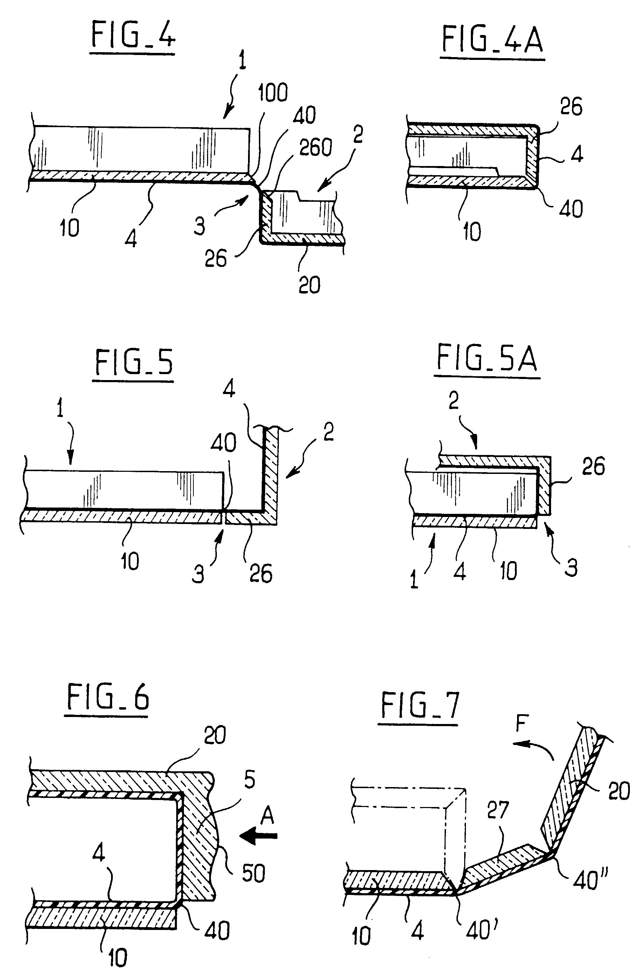

Dans le mode de réalisation illustré aux figures 4 et 4A, l'un des éléments - en l'occurrence l'élément 1 - est dépourvu de cloison du côté charnière. L'autre élément 2 comporte une telle cloison, référencée 26. La zone libre 40 de la feuille 4 se trouve donc directement à l'extrémité de la paroi 10.

A la simple observation des figures 4 et 4A, on comprend comment cette partie 40 joue le rôle de charnière.

Les bords libres 100, 260 des parois 10, 26 respectivement sont avantageusement chanfreinés pour que le débattement de la zone charnière 3 soit suffisant, même si la zone de feuille libre 40 est de faible largeur (ce qui limite les jeux).

Dans le mode de réalisation des figures 5 et 5A, la feuille 4 est fixée à l'inténeur du boîtier ; le mode de réalisation illustré est similaire à celui de la figure 4, l'élément 1 étant dépourvu de cloison, tandis que l'élément 2 comporte une cloison 26.

La feuille 4 adhère par conséquent à la face interne de la paroi 10 et aux faces internes de la paroi 20 et de la cloison 26.

Les informations prévues sur la face externe de la feuille 40 restent néanmoins visibles en raison de la transparence de ces parois.

Dans cette réalisation le degré d'ouverture du boîtier est limité (figure 5).

Dans la variante de la figure 6, la cloison d'extrémité de la partie 20, référencée 5, a une configuration particulière.

Sa face extérieure 50 est bombée, son galbe étant déterminé pour qu'elle joue le rôle de loupe. Il convient de mentionner que cette caractéristique est connue en soi (voir le DE-U-9 404 298).

Ainsi, l'observation du chant du boîtier, côté charnière, symbolisé par la flèche **A**, permet à un observateur de lire les inscriptions apposées sur la feuille 4, en vis-à-vis de cette cloison 5, sous une forme agrandie, ce qui en accroît la lisibilité.

Dans la variante de la figure 7, qui illustre la fermeture du boîtier, ce dernier est à double charnière. Le chant du boîtier est constitué d'une plaquette 27 qui est intercalée entre les parois 10 et 20. La feuille souple 4 est surmoulée sur ces trois éléments, et possède deux zones libres 40', 40" formant charnières. Des bords chanfreinés analogues aux bords 100 et 260 de la figure 4 autorisent la fermeture complète, illustrée en traits interrompus mixtes sur la figure.

Il a déjà été proposé d'insérer à l'intérieur d'un boîtier contenant un disque compact ou un autre article une étiquette de détection des vols ; cette étiquette est munie d'un micro-circuit électronique, d'une piste magnétique, d'une poudre métallique ou d'une information codée, ou d'autres moyens susceptibles d'être détectés par des moyens spécifiques (particules de cuivre, par exemple), qui sont par exemple installés dans un portique situé à la sortie d'un magasin.

Il se pose alors le problème du risque d'enlèvement de l'étiquette, qui rend la détection inopérante.

Dans un développement de la présente invention, les moyens de détection antivol sont directement contenus dans la feuille 4, ou fixés à celle-ci.

Ainsi, dans le cas où ces moyens de détection consistent en un circuit imprimé, l'impression du circuit peut se faire directement sur la feuille, avant ou après son surmoulage dans le reste du boîtier. Ces moyens sont donc inamovibles.

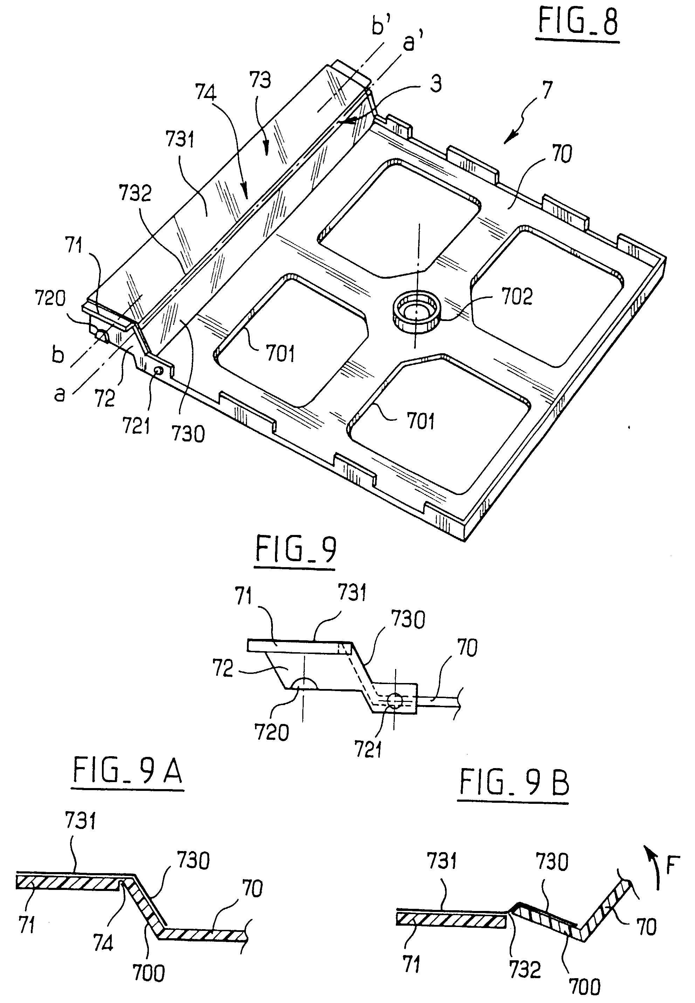

L'élément de boîtier 7 illustré sur les figures 8 et 9 est de même type général que celui faisant l'objet du document US-A-5 284 243.

Il s'agit d'un dispositif comprenant une barrette-support 71 en matière plastique, à laquelle est articulé un plateau pivotant 70. Ce dernier présente - de manière bien connue - une double rosace centrale 702 (dont l'une seulement est visible sur la figure 8) permettant le centrage et la retenue d'un disque compact (non représenté) sur chacune de ses deux faces. Ce plateau comporte des évidements d'allègement 701.

La barrette 71 présente, à chacune de ses deux extrémités, une aile transversale 72 qui est munie, côté externe, d'une paire de bossages 720, 721.

L'ensemble 70-71 est conformé et dimensionné de manière à pouvoir être inséré à l'intérieur d'un boîtier similaire à un boîtier standard, initialement conçu pour recevoir un seul disque compact.

Les bossages 720 viennent s'encliqueter dans les bords des trous recevant (de l'autre côté) les tourillons d'articulation du couvercle sur l'élément de fond du boîtier - et dont l'axe d'articulation correspond à l'axe référencé **bb'** sur la figure -.

Les bossages 721 se clipsent dans d'autres trous prévus dans les rebords latéraux de l'élément de fond du boîtier.

Toujours de manière connue, le plateau 70 présente, côté barrette, un rebord incliné 700, qui s'articule au bord de la barrette par une charnière 3 d'axe **aa'** parallèle à **bb'**.

Dans la réalisation qui fait l'objet du document US-A-5 284 243 déjà cité, cette charnière 3 est matérialisée par une ligne d'affaiblissement de matière, les éléments 71 et 70 formant une pièce de moulage monobloc.

Conformément à la présente invention, on réalise cette charnière au moyen d'une feuille souple 73 qui - comme dans les modes de réalisation de boîtier décrits plus haut - est fixée par surmoulage à chacun des éléments 71 et 70, ceux-ci étant des pièces distinctes.

On a désigné par les références 730 et 731 les zones de la feuille 73 qui adhèrent aux parties 700 et 71 respectivement. Elles sont séparées par une bande - ou zone libre intermédiaire - 732 de faible largeur qui forme à elle seule la charnière 3.

Bien entendu, comme dans les modes de réalisation précédents, les matériaux de la feuille 73 et des éléments 70 et 71 doivent être compatibles au moulage.

De plus, la feuille 73 doit être mécaniquement résistante, aussi bien à la traction qu'à la flexion.

Les mêmes matériaux que ceux cités plus haut peuvent être utilisés.

Dans le mode de réalisation illustré, on a désigné par la référence 74 une zone d'attache - ou patte - reliant le rebord 700 à la partie 71. Cette zone est prévue dans la zone centrale (dans le plan de symétrie longitudinal médian de l'élément de boîtier) et est obtenue par la présence d'un canal approprié dans le moule, permettant de mouler d'un seul bloc la barrette 71 et la partie 70.

Il est ainsi possible de manipuler facilement cet ensemble indéformable, notamment au moment de la mise en place des disques compacts au moyen d'une machine automatique sur le plateau 70, puis lors de l'insertion du dispositif à l'intérieur d'un boîtier.

La patte d'attache 74 est frangible, c'est-à-dire présente une faible résistance mécanique, qui permet de la rompre facilement.

Ainsi, au moment du premier mouvement de pivotement du plateau (flèche **F**, figure 9B), la patte 74 se casse, et la partie 70 se trouve dès lors articulée à la barrette 71 par la zone de feuille libre 732.

Bien entendu la feuille 73 peut être imprimée soit sur ses deux faces (ce qui a de l'intérêt si l'une au moins des parties 70, 71 est en matériau transparent), soit sur une face seulement, et faire ainsi office également d'étiquette informative et/ou décorative.

Il est possible de donner à la partie 730 de la feuille une surface suffisante pour qu'elle recouvre également - complètement ou partiellement - la partie principale 70 du plateau.

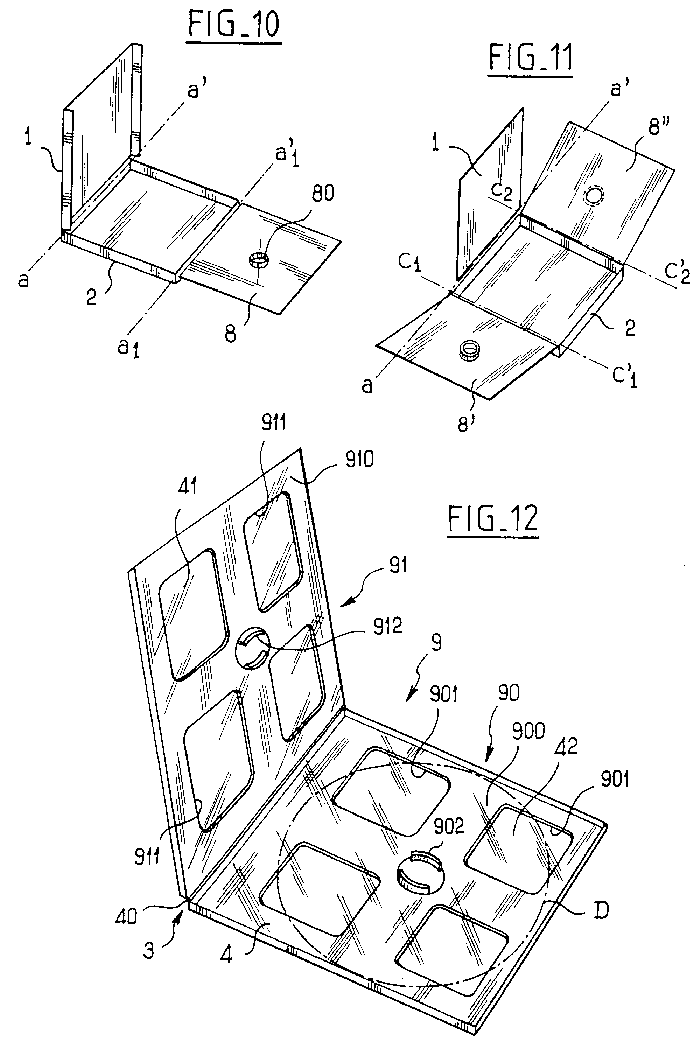

Le boîtier représenté à la figure 10 comprend un élément de fond 2 auquel est articulé un élément de couvercle 1, par une charnière d'axe **aa'**.

Un plateau 8 pourvu d'une double rosace de centrage et de retenue 80, apte à recevoir une paire de disques compacts (non représentés) est lui-même articulé à l'élément 2, par une charnière d'axe **a**_{**1**} **a'**_{**1**}.

Les axes **aa'** et **a**_{**1**} **a'**_{**1**} sont parallèles, les charnières étant disposées sur les deux côtés transversaux opposés de l'élément 2.

Le boîtier de la figure 11 comporte deux plateaux porte-disques 8', 8", articulés tous deux à l'élément de fond 2 par des axes **c**_{**1**}**c'**_{**1**} et, respectivement **c**_{**2**}**c'**_{**2**}, disposés cette fois sur les deux côtés latéraux de l'élément 2, perpendiculairement à l'axe **aa'**.

Conformément à l'invention, les axes de charnières **a**_{**1**}**a'**_{**1**}**, c**_{**1**}**c'**_{**1**}**, c**_{**2**}**c'**_{**2**}, peuvent être matérialisés par les zones intermédiaires libres de feuilles souples adhérant par surmoulage d'une part à l'élément de fond 12, et d'autre part au plateau 8, 8' et respectivement 8" correspondant.

La figure 12 représente un boîtier mince et léger 9 plus particulièrement destiné à recevoir un disque compact **D** (dont le contour est représenté par un trait interrompu mixte) du genre CD-ROM. Il est formé de deux éléments similaires 90, 91, à contour rectangulaire, articulés l'un à l'autre par une charnière 3.

Ces éléments 90, 91 sont des plateaux minces, à rebord très légèrement relevé, dans lequel on peut emprisonner le disque compact **D** lorsque le boîtier est fermé.

Des nervures centrales en arc-de-cercle complémentaires 902, 912, aptes à pénétrer dans l'ouverture centrale du disque, assurent son maintien dans le boîtier. Chaque plateau 90, 91 est largement évidé par des ouvertures d'allègement 901, 911, par exemple de forme rectangulaire à coins arrondis.

Il convient de noter que de telles ouvertures sont bien connues en soi (voir par exemple le EP-A-0 576 256).

Conformément à l'invention, une feuille étiquette 4 adhérant par surmoulage aux éléments 90 et 91 assure, par sa zone libre intermédiaire 40, la fonction de charnière. Dans le mode de réalisation illustré, les parties 41. 42 de la feuille 4 qui adhèrent aux parties planes 900 et 910 (respectivement) des éléments 90, 91 (respectivement), sont situées à l'intérieur du boîtier. La feuille recouvre les évidements 901, 911. Elle présente des ouvertures conformées pour venir entourer les parties saillantes 902, 912.

Des moyens de clippage non représentés, de type connu en soi, peuvent être prévus pour assurer le blocage des deux parties 90, 91 à l'état fermé.

De préférence le matériau constituant les éléments 90, 91 est transparent ; il s'agit par exemple de polystyrène cristal.

Avantageusement, la feuille 4 est également transparente, de sorte que le disque et les inscriptions qu'il porte sont visibles même si le boîtier est fermé.

Elle peut cependant comporter aussi des inscnptions imprimées, soit sur toute sa surface, soit en certaines zones seulement.

Quoique légers - en raison des ouvertures 901, 911 - les éléments 90, 91 jouent le rôle d'armatures, qui donnent une certaine rigidité au boîtier.

En plus de ses fonctions de charnière et - le cas échéant - d'étiquette, la feuille 4 joue un rôle protecteur, le disque se trouvant notamment à l'abri des poussières et du contact avec les doigts à l'intérieur du boîtier fermé.

Ce genre de boîtier peu coûteux, mais assurant une bonne protection du disque, peut avantageusement remplacer les étuis en carton léger usuellement mis en oeuvre pour la diffusion des CD-ROM, en particulier dans le cadre de leur vente groupée avec celle d'un magazine.

Un boîtier - ou un élément de boîtier - conforme à la présente invention peut recevoir divers articles, et non pas seulement des supports d'information tels que des disques compacts.

A titre d'exemples non limitatifs d'autres applications on peut citer des boîtiers destinés à recevoir des produits alimentaires ou des médicaments.

Ainsi, dans une application pharmaceutique, le boîtier - ou boîte - contenant les médicaments ayant un fond et/ou un couvercle en matériau transparent (polystyrène cristal notamment), on peut avantageusement faire usage d'une feuille charnière jouant le rôle d'étiquette, imprimée sur ses deux faces. Sa face externe porte des informations de préférence en couleurs, portant la marque du produit et permettant d'identifier le médicament. Sa face interne, visible après ouverture de la boîte, porte des informations destinées au patient (mode d'emploi, posologie, effets secondaires, composition, etc.). Jusqu'ici ce genre d'informations est apposé sur une notice en papier repliée, insérée dans la boîte avec les médicaments, dont l'usage est peu pratique et qui risque d'être facilement égarée.

## Revendications

1. Boîtier ou élément de boîtier qui est composé d'au moins deux éléments en matière plastique moulée articulés l'un à l'autre par au moins une charnière (3), et qui comporte une feuille souple (4 ; 73) qui est fixée par surmoulage à chacun desdits éléments, caractérisé par le fait que lesdits éléments sont en matériau rigide et cassant, notamment en polystyrène cristal, ladite charnière (3) est constituée, et uniquement constituée, par une zone libre intermédiaire (40 ; 732) de ladite feuille souple (4 ; 73).

2. Boîtier ou élément de boîtier selon la revendication 1, caractérisé par le fait que l'un au moins desdits éléments (1, 2 ; 70, 71) possède une paroi principale plane (10, 20 ; 700, 71 ; 900, 910) dont l'une des faces est complètement ou partiellement recouverte par une partie de ladite feuille (4 ; 73).

3. Boîtier ou élément de boîtier selon la revendication 2, caractérisé par le fait que ladite paroi pnncipale plane (900, 910) présente des évidements d'allégement (901, 911) qui sont également recouverts par ladite feuille (4).

4. Boîtier ou élément de boîtier selon l'une des revendications 1 à 3, caractérisé par le fait que ladite feuille (4 ; 73) est une étiquette informative.

5. Boîtier ou élément de boîtier selon l'une des revendications 1 à 4, caractérisé par le fait que lesdits éléments (1, 2 ; 70, 71) sont en matière plastique transparente.

6. Boîtier ou élément de boîtier selon les revendications 4 et 5 prises en combinaison, caractérisé par le fait que ladite feuille formant étiquette (4 ; 73) comporte des informations sur chacune de ses deux faces.

7. Boîtier ou élément de boîtier selon l'une des revendications 1 à 6, caractérisé par le fait que ladite feuille souple (4 ; 73) est réalisée dans un matériau ayant de bonnes résistances mécaniques tout en étant compatible au moulage avec la matière plastique constitutive desdits éléments (1, 2 ; 70, 71), ce matériau étant notamment un complexe polypropylène/polystyrène ou polyéthylène/polystyrène.

8. Boîtier selon l'une des revendications précédentes, dont l'un des éléments (2) est un fond et l'autre un couvercle (1), caractérisé par le fait que ces deux éléments présentent des profils d'emboîtement complémentaires (220-120) disposés en regard l'un de l'autre, dans la zone charnière (3), et aptes à assurer le guidage mutuel des deux éléments (1-2) au cours de la fermeture du boîtier, puis leur verrouillage relatif après fermeture.

9. Boîtier selon l'une des revendications précédentes, dont l'un des éléments (2) est un fond et l'autre un couvercle (1), tous deux possédant une paroi principale plane (10, 20) dont l'une des faces est complètement ou partiellement recouverte par une partie de ladite feuille (4), caractérisé par le fait que l'une au moins de ces parois principales (10, 20) présente, du côté de la charnière (3), un rebord (12, 22, 26, 27, 5) qui est également recouvert par la feuille (4).

10. Boîtier selon les revendications 8 et 9 prises en combinaison, caractérisé par le fait que ledit rebord (12,22) est muni d'un profil d'emboîtement (120, 220).

11. Boîtier selon les revendications 4, 5 et 9, prises en combinaison, caractérisé par le fait que la partie de la feuille (4) recouverte par ledit rebord (5) porte, sur sa face adhérant à celui-ci, une inscription informative visible par transparence à travers l'épaisseur de ce rebord (5), celui-ci étant conformé en loupe.

12. Boîtier selon l'une des revendications précédentes, qui est formé d'un élément de fond (2 ; 90) et d'un élément de couvercle (1 ; 91), caractérisé par le fait que ladite feuille (4) est fixée aux faces externes de ces éléments (1-2 ; 90-91).

13. Boîtier selon l'une des revendications 1 à 11, qui est formé d'un élément de fond (2) et d'un élément de couvercle (1), caractérisé par le fait que ladite feuille (4) est fixée aux faces internes desdits éléments (1, 2).

14. Boîtier ou élément de boîtier suivant l'une des revendications précédentes, caractérisé par le fait qu'il est destiné à recevoir au moins un support d'enregistrement, tel qu'un disque compact (D).

15. Boîtier ou élément de boîtier selon la revendication 14, caractérisé par le fait que l'un au moins de ses éléments articulés (2 ; 6 ; 70 ; 8 ; 8'-8" ; 90-91) est muni d'organes de centrage et de retenue du disque.

16. Boîtier ou élément de boîtier selon la revendication 15, caractérisé par le fait que lesdits organes consistent en une rosace (2 ; 70 ; 8 ; 8'-8" ; 90, 9l) venant de moulage avec l'élément, et apte à s'engager dans l'ouverture centrale du disque (D).

17. Boîtier selon la revendication 15, caractérisé par le fait qu'il a une forme plate, à contour rectangulaire de faible épaisseur, dont l'élément de fond (2) porte les organes de centrage et de retenue du disque (D).

18. Boîtier ou élément de boîtier selon l'une des revendications précédentes, caractérisé par le fait que ladite feuille (4) contient des moyens de détection anti-vol.

19. Elément de boîtier selon l'une des revendications 1 à 7 ou 14 à 16, caractérisé par le fait que l'un (70) de ses éléments articulés consiste en un plateau apte à supporter et retenir une paire de disques compact, chacun contre l'une de ses deux faces, tandis que l'autre (71) consiste en une barrette-support, l'ensemble (70-71) étant dimensionné et conformé de telle façon qu'il peut être inséré à l'intérieur d'un boîtier de forme et de dimensions similaires à un boîtier destiné à recevoir un seul disque compact.

20. Elément de boîtier selon la revendication 19, caractérisé par le fait que ladite barrette-support (71) comprend des ailes latérales (72) qui sont munies de bossages (720, 721) permettant son clippage dans le boîtier.

21. Elément de boîtier selon l'une des revendications 19 ou 20, caractérisé par le fait que lesdits éléments (70, 71) sont rattachés l'un à l'autre par au moins une patte frangible (74), de sorte qu'ils forment initialement un ensemble rigide favorisant la pose automatisée des disques sur le plateau (71), et sa pose dans le boîtier.

22. Boîtier ou élément de boîtier selon l'une des revendications précédentes, caractérisé par le fait que ladite feuille souple (4 ; 73) est transparente.

## Patentansprüche

1. Behälter oder Behälterelement, das aus mindestens zwei aus Kunststoff hergestellten Elementen besteht, welche mittels eines Scharniers (3) untereinander angelenkt sind, und der oder das mindestens eine elastische Folie (4; 73) aufweist, welche auf jedes der Elemente aufgeformt ist,
**dadurch gekennzeichnet, daß**
diese Elemente aus einem steifen spröden Material hergestellt sind, insbesondere aus einem Polystyrolkristall, wobei das Scharnier (3) ausschließlich durch einen freien Zwischenbereich (40; 732) der elastischen Folie (4; 73) gebildet wird.

2. Behälter oder Behälterelement nach Anspruch 1,
**dadurch gekennzeichnet, daß**
mindestens eines der Elemente (1,2; 70, 71) eine flache Hauptwand (10, 20; 700, 71; 900, 910) aufweist, deren eine Seite vollkommen oder teilweise von einem Teil der Folie (4; 73) überdeckt ist.

3. Behälter oder Behälterelement nach Anspruch 2,
**dadurch gekennzeichnet, daß**
diese flache Hauptwand (900, 910) entlastende Vertiefungen (901, 911) aufweist, die ebenfalls von der Folie (4) überdeckt werden.

4. Behälter oder Behälterelement nach einem der Ansprüche 1 bis 3,
**dadurch gekennzeichnet, daß**
die Folie (4; 73) ein beschriftetes Etikett ist.

5. Behälter oder Behälterelement nach einem der Ansprüche 1 bis 4,
**dadurch gekennzeichnet, daß**
die Elemente (1, 2; 70, 71) aus einem transparenten Kunststoff hergestellt sind.

6. Behälter oder Behälterelement nach einem der Ansprüche 4 und 5 in Kombination,
**dadurch gekennzeichnet, daß**
die das Etikett bildende Folie (4; 73) auf ihren beiden Seiten Beschriftungen enthält.

7. Behälter oder Behälterelement nach einem der Ansprüche 1 bis 6,
**dadurch gekennzeichnet, daß**
die elastische Folie (4; 73) aus einem Material hergestellt ist, das eine gute mechanische Festigkeit aufweist und dennoch mit dem Kunststoffmaterial geformt werden kann, aus dem die Elemente (1, 2; 70, 71) hergestellt sind, wobei dieses Material insbesondere eine Verbindung aus Polypropylen/Polystyrol oder Polyethylen/Polystyrol ist.

8. Behälter nach einem der vorausgegangenen Ansprüche, bei dem eines der Elemente (2) den Boden und das andere Element (1) den Deckel bildet,
**dadurch gekennzeichnet, daß**
diese Elemente komplementäre Eingriffsprofile (220-120) aufweisen, die im Bereich des Scharniers (3) einander gegenüberliegend angeordnet und geeignet sind, die wechselseitige Führung der beiden Elemente (1-2) während der Schließung des Behälters und nach der Schließung ihre relative Verriegelung zu gewährleisten.

9. Behälter nach einem der vorausgegangenen Ansprüche, bei dem eines der Elemente (2) den Boden und das andere Element (1) den Deckel bildet, und beide eine flache Hauptwand (10, 20) besitzen, deren eine Seite vollkommen oder teilweise von einem Teil der Folie (4) überdeckt wird,
**dadurch gekennzeichnet, daß**
mindestens eine dieser Hauptwände (10, 20) an der Seite des Scharniers (3) einen nach außen umgebogenen Rand (12, 22, 26, 27, 5) aufweist, der ebenfalls von der Folie (4) überdeckt wird.

10. Behälter nach einem der Ansprüche 8 und 9 in Kombination,
**dadurch gekennzeichnet, daß**
der nach außen umgebogene Rand (12, 22) mit einem Eingriffsprofil (120, 220) ausgestattet ist.

11. Behälter nach einem der Ansprüche 4, 5 und 9 in Kombination,
**dadurch gekennzeichnet, daß**
der Teil der von dem nach außen umgebogenen Rand (5) überdeckten Folie (4) an ihrer daran haftenden Seite eine Beschriftung aufweist, welche durch Transparenz durch die Dicke dieses nach außen umgebogenen Randes (5) sichtbar ist, welcher als Lupe ausgebildet ist.

12. Behälter nach einem der vorausgegangenen Ansprüche, welcher aus einem Bodenelement (2; 90) und einem Deckelelement (1; 91) besteht,
**dadurch gekennzeichnet, daß**
die Folie (4) an den Außenseiten dieser Elemente (1-2; 90-91) befestigt ist.

13. Behälter nach einem der Ansprüche 1 bis 11, welcher aus einem Bodenelement (2) und einem Deckelelement (1) besteht,
**dadurch gekennzeichnet, daß**
die Folie (4) an den Innenseiten der Elemente (1, 2) befestigt ist.

14. Behälter oder Behälterelement nach einem der vorausgegangenen Ansprüche,
**dadurch gekennzeichnet, daß**
er dafür bestimmt ist, mindestens einen Datenträger, wie etwa eine Compact Disc (D), aufzunehmen.

15. Behälter oder Behälterelement nach Anspruch 14,
**dadurch gekennzeichnet, daß**
mindestens eines seiner angelenkten Elemente (2; 6; 70; 8; 8'-8"; 90-91) mit Vorrichtungen für die Zentrierung und die Halterung der Compact Disc (D) ausgerüstet ist.

16. Behälter oder Behälterelement nach Anspruch 15,
**dadurch gekennzeichnet, daß**
diese Vorrichtungen aus einer Rosette (2; 70; 8; 8'-8"; 90, 91) bestehen, welche an das Behälterelement angeformt und geeignet ist, in die zentrale Öffnung der Compact Disc (D) einzugreifen.

17. Behälter nach Anspruch 15,
**dadurch gekennzeichnet, daß**
er eine flache mit einem rechteckigen dünnen Profil ausgestattete Form aufweist, wobei das Bodenelement (2) des Behälters die Vorrichtungen für die Zentrierung und die Halterung der Compact Disc (D) aufweist.

18. Behälter oder Behälterelement nach einem der vorausgegangenen Ansprüche,
**dadurch gekennzeichnet, daß**
die Folie (4) Mittel für die Diebstahlsicherung aufweist.

19. Behälterelement nach einem der Ansprüche 1 bis 7 oder 14 bis 16,
**dadurch gekennzeichnet, daß**
die Tatsache, daß eines seiner angelenkten Elemente (70) aus einer Platte besteht, die geeignet ist, ein Paar Compact Discs jeweils auf einer ihrer Flächen aufzunehmen und zu halten, während das andere angelenkte Element (71) aus einem Tragbügel besteht, und daß die Einheit (70-71) so bemessen und gestaltet ist, daß sie in das Innere eines Behälters eingeschoben werden kann, welcher die gleiche Form und die gleichen Abmessungen hat, wie ein Behälter, in den nur eine einzige Compact Disc eingelegt werden kann.

20. Behälterelement nach Anspruch 19,
**dadurch gekennzeichnet, daß**
der Tragbügel (71) seitliche Flügel (72) aufweist, welche mit Vorsprüngen (720, 721) versehen sind, die ihre Verklemmung in dem Behälter ermöglichen.

21. Behälterelement nach einem der Ansprüche 19 oder 20,
**dadurch gekennzeichnet, daß**
die Elemente (70, 71) untereinander mindestens mittels einer abreißbaren Öse (74) verbunden sind, so daß sie zu Anfang eine steife Einheit bilden, welche das automatische Auflegen der Compact Discs auf der Platte (71) und ihr Einlegen in den Behälter begünstigen.

22. Behälter oder Behälterelement nach einem der vorausgegangenen Ansprüche,
**dadurch gekennzeichnet, daß**
die elastische Folie (4; 73) transparent ist.

## Claims

1. A box or a box element made up of at least two molded plastic material elements hinged to each other by at least one hinge (3), and including a flexible sheet (4; 73) fixed to each of said elements by overmolding, characterized by the fact that said elements are made of rigid, brittle material, in particular clear polystyrene, said hinge (3) is constituted by, and is constituted solely by, an intermediate free zone (40; 732) of said flexible sheet (4; 73).

2. A box or a box element according to claim 1, characterized by the fact that at least one of said elements (1, 2; 70, 71) possesses a plane main wall (10, 20; 700, 71; 900, 910) at least one of the faces of which is completely or partially covered by a portion of said sheet (4; 73).

3. A box or a box element according to claim 2, characterized by the fact that said plane main wall (900, 910) has weight-reducing openings (901, 911) that are also covered by said sheet (4).

4. A box or a box element according to any one of claims 1 to 3, characterized by the fact that said sheet (4; 73) is an informative label.

5. A box or a box element according to any one of claims 1 to 4, characterized by the fact that said elements (1, 2; 70, 71) are made of transparent plastics material.

6. A box or a box element according to claims 4 and 5, in combination, characterized by the fact that said label-forming sheet (4; 73) includes information on both faces.

7. A box or a box element according to any one of claims 1 to 6, characterized by the fact that said flexible sheet (4; 73) is made of a material having good mechanical strength while being compatible, on molding, with the plastics material constituting said elements (1, 2; 70, 71), said material being, in particular, a polypropylene-polystyrene or a polyethylene-polystyrene composite.

8. A box according to any preceding claim, in which one of elements (2) is a bottom and the other is a cover (1), characterized by the fact that said two elements have complementary mutually engaging profiles (220-120) disposed facing each other in the hinge zone (3) and suitable for providing mutual guidance for the two elements (1-2) while the box is being closed, and then for providing relative locking therebetween after closure.

9. A box according to any preceding claim, in which one of the elements (2) is a bottom and the other is a cover (1), both possessing a plane main wall (10, 20) with one of its faces being completely or partially covered by a portion of said sheet (4), characterized by the fact that at least one of the main walls (10, 20) has a rim (12, 22, 26, 27, 5) adjacent to the hinge (3) and likewise covered by the sheet (4).

10. A box according to claim 8 and 9, taken in combination, characterized by the fact that said rim (12, 22) is provided with a profile for mutual engagement (120, 220).

11. A box according to claims 4, 5, and 9, taken in combination, characterized by the fact that the sheet portion (4) covered by said rim (5) carries, on its face adhering thereto, informative marking visible through the transparent thickness of said rim (5), which rim is shaped to form a magnifying glass.

12. A box according to any preceding claim, formed by a bottom element (2; 90) and a cover element (1; 91), characterized by the fact that said sheet (4) is fixed to the outside faces of said elements (1-2; 90-91).

13. A box according to any one of claims 1 to 11, formed by a bottom element (2) and a cover element (1), characterized by the fact that said sheet (4) is fixed to the inside faces of said elements (1, 2).

14. A box or a box element according to any preceding claim, characterized by the fact that it is designed to receive at least one recording medium, such as a compact disk (D).

15. A box or a box element according to claim 14, characterized by the fact that at least one of its hinged elements (2; 6; 70; 8; 8'-8"; 90-91) is provided with means for centering and retaining the disk.

16. A box or a box element according to claim 15, characterized by the fact that said members constitute a rosette (2; 70; 8; 8'-8"; 90-91) integrally molded with the element and suitable for engaging in the central opening of the disk (D).

17. A box according to claim 15, characterized by the fact that it is flat in shape, rectangular in outline, and thin, the bottom element (2) thereof carrying the members for centering and retaining the disk (D).

18. A box or a box element according to any preceding claim, characterized by the fact that said sheet (4) contains anti-theft detection means.

19. A box element according to any one of claims 1 to 7 or 14 to 16, characterized by the fact that one (70) of its hinged-together elements consists in a tray suitable for supporting and retaining a pair of compact disks, each against a respective one of its two faces, while the other element (71) consists in a support strip, the assembly (70-71) being dimensioned and shaped in such a manner as to be capable as being inserted inside a box having shape and dimensions similar to a box designed to receive a single compact disk.

20. A box element according to claim 19, characterized by the fact that said support strip (71) includes lateral webs (72) provided with projections (720, 721) enabling it to be snap-fastened in the box.

21. A box element according to claim 19 or 20, characterized by the fact that said elements (70, 71) are connected to each other by at least one frangible tab (74) such as to form initially a rigid assembly favoring automated placement of disks on the tray (71) and its own placement in the box.

22. A box or a box element according to any preceding claim, characterized by the fact that said flexible sheet (4; 73) is transparent.
